(19) Europäisches Patentamt
European Patent Office
Office européen des brevets

(11) **EP 4 614 181 A1**

(12) **EUROPEAN PATENT APPLICATION**
published in accordance with Art. 153(4) EPC

(43) Date of publication:
**10.09.2025 Bulletin 2025/37**

(21) Application number: **23884530.9**

(22) Date of filing: **28.09.2023**

(51) International Patent Classification (IPC):
**G01S 5/06** (2006.01)

(52) Cooperative Patent Classification (CPC):
**G01S 5/06; G07C 9/00; H04W 4/02; H04W 4/06;
H04W 64/00**

(86) International application number:
**PCT/CN2023/122377**

(87) International publication number:
**WO 2024/093598 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022 CN 202211347628**

(71) Applicant: **Tsingcar (Beijing) Technology Co., Ltd.
Daxing District@Beijing 100176 (CN)**

(72) Inventors:
• **ZHAO, Ruixiang
Beijing 100176 (CN)**
• **YIN, Zuobiao
Beijing 100176 (CN)**
• **ZHANG, Xiyang
Beijing 100176 (CN)**

(74) Representative: **Chung, Hoi Kan
Mandarin IP Limited
7 Cherry Trees
Great Shelford
Cambridge CB22 5XA (GB)**

(54) **POSITIONING METHOD, APPARATUS, AND SYSTEM FOR SMART KEY, ELECTRONIC DEVICE, AND MEDIUM**

(57) The present application discloses a positioning method, apparatus, and system for a smart key, an electronic device, and a medium. The method is implemented by means of the smart key positioning system. The method is applied to a vehicle-mounted positioning apparatus and comprises: receiving a first positioning signal, and determining angle information of a vehicle-mounted positioning tag according to the first positioning signal; receiving a second positioning signal and a third positioning signal, and determining distance information of the vehicle-mounted positioning tag according to the second positioning signal and the third positioning signal; and determining position information of the vehicle-mounted positioning tag according to the angle information and the distance information. **In** the present application, a fusion tag and a fusion base station are used, and accurate positioning of a vehicle key can be implemented only by installing one anchor point on a vehicle; and compared with the prior art, the deployment difficulty is reduced while the positioning effect is improved, and the application scenario is wide.

Receive a first positioning signal, and determine angle information of a vehicle-mounted positioning tag according to the first positioning signal — S310

Receive a second positioning signal and a third positioning signal, and determine distance information of the vehicle-mounted positioning tag according to the second positioning signal and the third positioning signal — S320

Determine position information of the vehicle-mounted positioning tag according to the angle information and the distance information — S330

FIG. 3

**Description**

The present application claims the priority of Chinese Patent Application No. 202211347628.X, filed with the China National Intellectual Property Administration on October 31, 2022 and entitled "POSITIONING METHOD, APPARATUS, AND SYSTEM FOR SMART KEY, ELECTRONIC DEVICE, AND MEDIUM", which is incorporated herein by reference in its entirety.

TECHNICAL FIELD

This application relates to the technical field of sensing and measurement, and in particular, to a method, an apparatus and a system for positioning a smart key, an electronic device, and a medium.

BACKGROUND

Most of the smart keys used by the existing intelligent vehicles adopt Bluetooth-based positioning approaches, in which multiple Bluetooth anchors are deployed at the vehicle end. The key end communicates with the vehicle end anchors to measure the signal strength of the key to each anchor, and then the key is positioned through the magnitude of the signal strength.

In addition to Bluetooth, some vehicles currently use UWB technology to perform key positioning. Specifically, multiple UWB anchors are installed at the vehicle end to perform communication ranging with the UWB chip at the key end, and then the key is positioned in a geometric positioning manner through the distance information from each anchor to the key.

However, Bluetooth-based positioning only achieves meter-level accuracy, which can only provide a rough estimation of the region and cannot perform precise positioning. Moreover, model calibration and learning are required before use, making the process cumbersome. Additionally, both Bluetooth and UWB technologies require multiple anchors for positioning, resulting in high costs.

SUMMARY

In view of the above, embodiments of the present application provide a method, an apparatus and a system for positioning a smart key, an electronic device, and a medium. In the present application, a fusion tag and a fusion base station are used as signal transmission and reception sources, enabling precise positioning of the smart key with the installation of only a single anchor.

According to a first aspect, an embodiment of this application provides method for positioning a smart key, the method being implemented by a smart key positioning system, the system comprising a vehicle-mounted positioning apparatus, a vehicle anchor and a vehicle-mounted positioning tag that are communicatively connected to each other, the vehicle-mounted positioning tag being loaded in the smart key, and the vehicle anchor being loaded at a designated position of a vehicle;

the vehicle-mounted positioning tag broadcasting a first positioning signal, which is received by the vehicle anchor and forwarded to the vehicle-mounted positioning apparatus; and
the vehicle-mounted positioning tag broadcasting a second positioning signal, which is received by the vehicle anchor, a feedback signal being generated by the vehicle anchor based on the second positioning signal, a third positioning signal being generated by the vehicle-mounted positioning tag based on the feedback signal and transmitted together with the second positioning signal to the vehicle-mounted positioning apparatus;
wherein the method is applied to the vehicle-mounted positioning apparatus, and the method comprises:
receiving the first positioning signal, and determining angle information of the vehicle-mounted positioning tag according to the first positioning signal; and
receiving the second positioning signal and the third positioning signal, and determining distance information of the vehicle-mounted positioning tag according to the second positioning signal and the third positioning signal; and
determining position information of the vehicle-mounted positioning tag according to the angle information and the distance information.

According to a second aspect, an embodiment of this application further provides a vehicle-mounted positioning apparatus, comprising:

an angle determining unit, configured to receive a first positioning signal, and determine angle information of a vehicle-mounted positioning tag according to the first positioning signal;

a distance determining unit, configured to receive a second positioning signal and a third positioning signal, and determine distance information of the vehicle-mounted positioning tag according to the second positioning signal and the third positioning signal; and

a positioning unit, configured to determine position information of the vehicle-mounted positioning tag according to the angle information and the distance information.

According to a third aspect, an embodiment of this application further provides a system for positioning a smart key, the system comprising a vehicle-mounted positioning apparatus, a vehicle anchor and a vehicle-mounted positioning tag that are communicatively connected to each other, the vehicle-mounted positioning tag being loaded in the smart key, and the vehicle anchor being loaded at a designated position of a vehicle.

The vehicle-mounted positioning tag is configured to broadcast a first positioning signal and a second positioning signal, generate a third positioning signal according to a feedback signal sent by the vehicle anchor, and send the second positioning signal and the third positioning signal to the vehicle-mounted positioning apparatus;

the vehicle anchor is configured to receive the first positioning signal, forward the first positioning signal to the vehicle-mounted positioning apparatus, and generate a feedback signal according to the received second positioning signal and return the feedback signal to the vehicle-mounted positioning tag; and

the vehicle-mounted positioning apparatus is configured to receive the first positioning signal, determine angle information of the vehicle-mounted positioning tag according to the first positioning signal, receive the second positioning signal and the third positioning signal, determine distance information of the vehicle-mounted positioning tag according to the second positioning signal and the third positioning signal, and determine position information of the vehicle-mounted positioning tag according to the angle information and the distance information.

According to a fourth aspect, an embodiment of this application further provides an electronic device, including: a processor; and a memory configured to store computer-executable instructions, where the executable instructions, when executed, cause the processor to perform the foregoing method.

According to a fifth aspect, an embodiment of this application further provides a computer-readable storage medium, where the computer-readable storage medium stores one or more programs, and when the one or more programs are executed by an electronic device including a plurality of applications, the electronic device is enabled to perform the foregoing method.

The at least one technical solution adopted in the embodiments of this application can achieve the following beneficial effects.

This application designs a smart key positioning system, where the system includes a vehicle-mounted positioning apparatus, a vehicle anchor and a vehicle-mounted positioning tag that are communicatively connected to each other, the vehicle-mounted positioning tag being loaded in the smart key, and the vehicle anchor being loaded at a designated position of a vehicle. In a working state, the vehicle-mounted positioning tag broadcasts a first positioning signal, which is received by the vehicle anchor and forwarded to the vehicle-mounted positioning apparatus. The vehicle-mounted positioning tag broadcasts a second positioning signal. The vehicle anchor receives the second positioning signal and generates a feedback signal according to the second positioning signal. The vehicle-mounted positioning tag generates a third positioning signal according to the feedback signal, and sends the second positioning signal and the third positioning signal to the vehicle-mounted positioning apparatus. The method provided in this application may be applied to the vehicle-mounted positioning apparatus, and the method includes: receiving the first positioning signal, and determining angle information of the vehicle-mounted positioning tag according to the first positioning signal; and receiving the second positioning signal and the third positioning signal, and determining distance information of the vehicle-mounted positioning tag according to the second positioning signal and the third positioning signal; and determining position information of the vehicle-mounted positioning tag according to the angle information and the distance information. In the present application, a fusion tag and a fusion base station (anchor) are employed, enabling accurate positioning of the vehicle key with only a single anchor installed on the vehicle. This not only improves the positioning performance but also reduces deployment complexity, and is applicable to a wide range of scenarios.

BRIEF DESCRIPTION OF DRAWINGS

The drawings described herein are used to provide a further understanding of the present application and constitute a part of the present application, and the illustrative embodiments of the present application and the description thereof are used to explain the present application, and do not constitute an improper limitation on the present application. In the drawings:

FIG.1 illustrates a schematic diagram of an application scenario according to an embodiment of the present disclosure;

FIG.2 is a schematic structural diagram of a system for positioning a smart key according to an embodiment of the present disclosure;

FIG.3 is a schematic flowchart of a method for positioning a smart key according to an embodiment of this application;

FIG.4 is a schematic diagram of a positioning error distribution result according to an embodiment of the present disclosure;

FIG.5 is a schematic structural diagram of an apparatus for positioning a smart key according to an embodiment of the present disclosure; and

FIG.6 is a schematic structural diagram of an electronic device according to an embodiment of this application.

DETAILED DESCRIPTION OF THE EMBODIMENTS

To make the objectives, technical solutions, and advantages of this application clearer, the following clearly and completely describes the technical solutions of this application with reference to specific embodiments of this application and the accompanying drawings. Apparently, the described embodiments are only a part but not all of the embodiments of the present disclosure. All other embodiments obtained by a person of ordinary skill in the art based on the embodiments of this application without creative efforts shall fall within the protection scope of this application.

The technical solutions provided in the embodiments of this application are described in detail below with reference to the accompanying drawings.

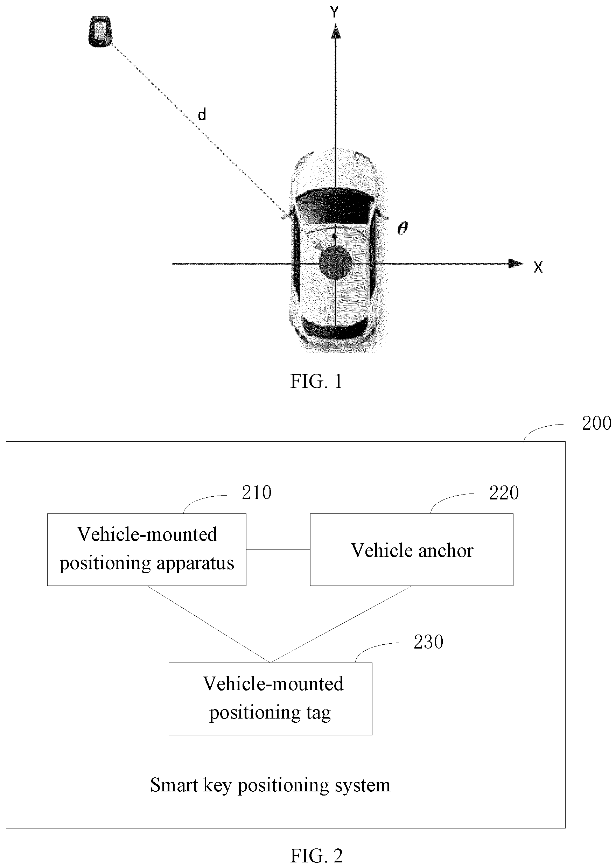

FIG. 1 is a schematic diagram of an application scenario according to an embodiment of the present application. The present application may be used in a vehicle key positioning scenario of an intelligent vehicle. When a user holds a vehicle key close to, leaves, or is within a certain distance from the smart vehicle, the vehicle key may be located, and a certain operation may be performed according to the positioning result, such as starting, locking, and the like.

FIG. 2 shows a schematic structural diagram of a positioning system of a smart key according to an embodiment of the present application. It can be seen from FIG. 2 that the positioning system 200 of the smart key comprises a vehicle-mounted positioning apparatus 210, a vehicle anchor 220 and a vehicle-mounted positioning tag 230 that are communicatively connected to each other. The vehicle-mounted positioning tag 230 is loaded in the smart key. The vehicle anchor 220, also referred to as an anchor, is mounted at a designated position on the vehicle. The number of the vehicle anchor 220 is at least one. As shown in FIG. 1, the vehicle anchor 220 may be mounted at a central position of the smart vehicle. The vehicle-mounted positioning apparatus 210 may be understood as a positioning service end, which may be installed in the smart vehicle, e.g., on the vehicle's console, or may be a remote server. The present application imposes no limitation in this regard.

When the positioning system 200 of the smart key is in a working state, the vehicle-mounted positioning tag 230 may broadcast the first positioning signal at a first frequency. On receipt of the first positioning signal, the vehicle anchor 220 forwards the first positioning signal to the vehicle-mounted positioning apparatus 210.

In addition, the vehicle-mounted positioning tag 230 also broadcasts a second positioning signal at a second frequency. On receipt of the second positioning signal, the vehicle anchor 220 feeds back to the vehicle-mounted positioning tag 230. The vehicle-mounted positioning tag 230 generates a third positioning signal according to the feedback signal, and sends the second positioning signal and the third positioning signal to the vehicle-mounted positioning apparatus 210. In some other embodiments, the vehicle-mounted positioning tag 230 returns the third positioning signal to the vehicle anchor 220, and the vehicle anchor 220 sends the second positioning signal and the third positioning signal to the vehicle-mounted positioning apparatus 210.

It should be noted that the vehicle-mounted positioning tag 230 in the present application is a fusion tag, can send not only the first positioning signal but also the second positioning signal and the third positioning signal. The vehicle anchor 220 is a fusion base station or a fusion anchor, can forward a signal, and may also provide feedback according to the second positioning signal. **In** some embodiments, the second frequency is higher than the first frequency.

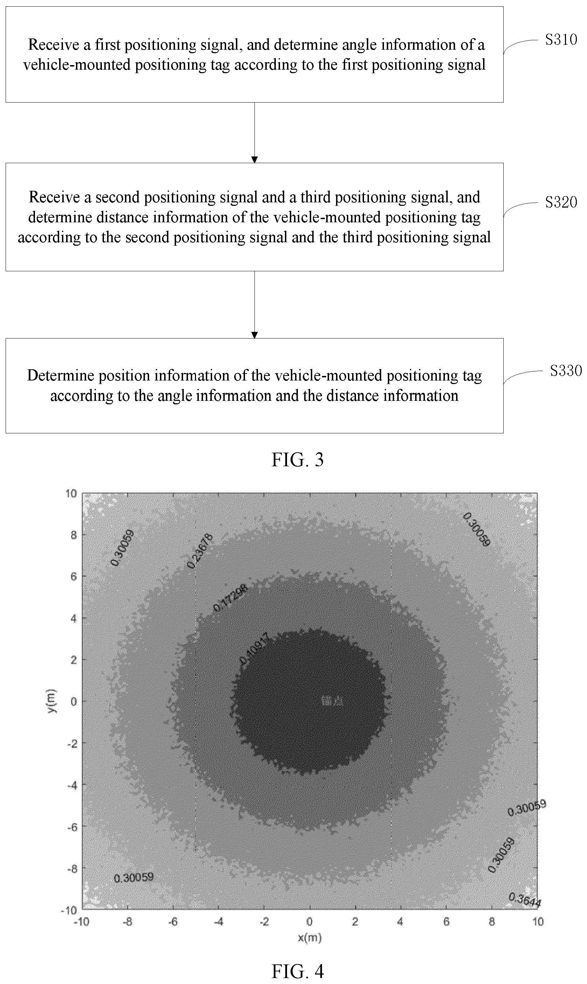

The method provided in this application is applied to the vehicle-mounted positioning apparatus 210. FIG. 3 shows a schematic flowchart of the method for positioning a smart key according to an embodiment of this application. It can be seen from FIG. 3 that the method includes at least steps S310 to S330.

**In** step S310, a first positioning signal is received, and angle information of the vehicle-mounted positioning tag is determined according to the first positioning signal.

In some embodiments of this application, the first positioning signal is an AOA (Angle-of-Arrival) signal. AOA is a ranging technique based on the angle at which a signal arrives. It is a typical positioning algorithm based on ranging, in which the base station senses the arrival direction of a signal transmitted by a transmitting node to calculate the relative orientation or angle between the receiving node and the transmitting node. The position of the unknown node (i.e., the transmitting node) is then determined using triangulation or other methods. The AOA-based positioning algorithm has low communication overhead and offers relatively high positioning accuracy.

The vehicle-mounted positioning tag 230 broadcasts a first positioning signal to the vehicle anchor 220 at a first preset frequency. The vehicle anchor 220 may be regarded as the receiving node, and the vehicle-mounted positioning tag 230 may be regarded as the transmitting node. The vehicle-mounted positioning tag 230 transmits the first positioning signal to the vehicle anchor 220. The first positioning signal includes the angle of arrival of the vehicle anchor 220 relative to the vehicle-mounted positioning tag 230. The vehicle anchor 220 transmits the first positioning signal, which includes the angle of arrival, to the vehicle-mounted positioning apparatus 210. The vehicle-mounted positioning apparatus 210 can determine the angle information between the vehicle-mounted positioning tag 230 (i.e., the smart key) and the vehicle anchor 220 based on the first positioning signal. The angle information may be understood as the included angle $\theta$ formed between the straight line connecting the smart key (i.e., the vehicle-mounted positioning tag 230) to the vehicle-mounted positioning apparatus 210 and the positive direction of the horizontal axis of the coordinate system (as shown in FIG. 1).

**In** step S320, a second positioning signal and a third positioning signal are received, and distance information of the vehicle-mounted positioning tag is determined according to the second positioning signal and the third positioning signal.

In some embodiments of this application, the second positioning signal is a UWB (Ultra-Wide Band) signal, which is a low-power radio technology applied in the field of wireless communication and achieves wireless communication by using nanosecond-level or sub-nanosecond-level pulses. The relative bandwidth of the UWB signal (i.e., the ratio of signal bandwidth to center frequency) is not less than 0.2, or the absolute bandwidth is not less than 500 MHz, and the signal applies to the designated frequency band of 3.1-10.6 GHz. The effective isotropic radiated power of the UWB system transmitter does not exceed -41.25 dBM/MHz. UWB positioning technology has the advantages of high accuracy, high dynamics, high capacity, and low power consumption.

It should be noted that the process in which the vehicle-mounted positioning tag 230 broadcasts signals to the vehicle anchor 220 is a continuous process, which may be understood as signal transmission at a certain frequency, where a signal is transmitted to the vehicle anchor 220 at the beginning or end of each cycle corresponding to the frequency. For example, if the first frequency is 500 Hz, a first positioning signal is broadcast every 2ms. From a macroscopic perspective, the transmission behavior thus appears to be in a "continuous" state.

In the prior art, the positioning accuracy of UWB is related to the number of base stations used. If only zero-dimensional positioning is required, then only one UWB base station is needed; for one-dimensional positioning, two UWB base stations are required, and so on. When three-dimensional positioning is needed, four UWB base stations are required. Therefore, when installing UWB base stations outdoors, multiple installations are necessary. However, in the present application, only zero-dimensional positioning is required, i.e., it is only necessary to obtain a single distance measurement. As such, only one UWB base station is required at minimum.

The vehicle-mounted positioning tag 230 may broadcast a second positioning signal to the vehicle anchor 220 according to a second frequency. The vehicle anchor 220 generates a feedback signal based on the second positioning signal and returns the feedback to the vehicle-mounted positioning tag 230. The vehicle-mounted positioning tag 230 generates a third positioning signal based on the received feedback information and transmits the third positioning signal together with the second positioning signal to the vehicle-mounted positioning apparatus 210. The vehicle-mounted positioning apparatus 210 can determine the distance information between the smart key and the vehicle anchor 220 based on the second positioning signal and the third positioning signal. The method for determining the distance information may be based on a TOF approach, a TOA approach, or a TDOA approach. The distance information may be understood as the distance d between the smart key (i.e., the vehicle-mounted positioning tag 230) and the vehicle-mounted positioning apparatus 210.

In some embodiments of the present application, the second frequency may be significantly greater than the first frequency. This may be understood as the vehicle-mounted positioning tag 230 broadcasting the second positioning signal in a "non-continuous" manner. For example, if the second frequency is 50 Hz, a second positioning signal is broadcast every 20ms. From a macroscopic perspective, the transmission behavior appears to be in a "non-continuous" state. This approach is relatively power-efficient.

The vehicle-mounted positioning apparatus 210 can determine the distance information of the vehicle-mounted positioning tag 230 based on the TOF, TOA, or TDOA approaches, where the TOF approach is the Time of Flight approach, the TOA approach is the Time of Arrival approach, and the TDOA approach is the time difference of arrival approach. Since the TOA and TDOA approaches require time synchronization, which imposes stricter requirements, the TOF approach is more preferred in the present application. The specific algorithm can refer to existing technologies.

In step S330, position information of the vehicle-mounted positioning tag is determined according to the angle information and the distance information.

Finally, the position information of the vehicle-mounted positioning tag 230 is determined according to the angle information and distance information determined previously. Taking the scenario shown in FIG. 1 as an example, the distance information may be understood as the distance d between the smart key (i.e., the vehicle-mounted positioning tag 230) and the vehicle-mounted positioning apparatus 210, and the angle information may be understood as the included angle $\theta$ formed between the straight line connecting the smart key (i.e., the vehicle-mounted positioning tag 230) to the vehicle-mounted positioning apparatus 210 and the positive direction of the horizontal axis of the coordinate system (as shown in FIG. 1).

In some embodiments, the position information may be understood as position coordinates of the smart key, and the position information of the vehicle-mounted positioning tag may be determined according to the following formulas (1) to (2).

$$x = x_{anchor} + d * \cos\theta \qquad (1);$$

$$y = y_{anchor} + d * \sin\theta \qquad (2);$$

(x, y) represents position coordinates of the vehicle-mounted positioning tag; ($x_{anchor}$, $y_{anchor}$) represents position coordinates of the vehicle anchor; d represents a distance from the vehicle-mounted positioning tag to the vehicle anchor; and θ represents an included angle formed between a line connecting the vehicle-mounted positioning tag to the vehicle anchor and a positive direction of a horizontal axis.

It can be seen from the method shown in FIG. 3 that this application designs a smart key positioning system, where the system includes a vehicle-mounted positioning apparatus, a vehicle anchor and a vehicle-mounted positioning tag that are communicatively connected to each other, the vehicle-mounted positioning tag being loaded in the smart key, and the vehicle anchor being loaded at a designated position of a vehicle. **In** a working state, the vehicle-mounted positioning tag broadcasts a first positioning signal, which is received by the vehicle anchor and forwarded to the vehicle-mounted positioning apparatus. The vehicle-mounted positioning tag broadcasts a second positioning signal. The vehicle anchor receives the second positioning signal and generates a feedback signal according to the second positioning signal. The vehicle-mounted positioning tag generates a third positioning signal according to the feedback signal, and sends the second positioning signal and the third positioning signal to the vehicle-mounted positioning apparatus. The method provided in this application may be applied to the vehicle-mounted positioning apparatus, and the method includes: receiving the first positioning signal, and determining angle information of the vehicle-mounted positioning tag according to the first positioning signal; and receiving the second positioning signal and the third positioning signal, and determining distance information of the vehicle-mounted positioning tag according to the second positioning signal and the third positioning signal; and determining position information of the vehicle-mounted positioning tag according to the angle information and the distance information. **In** the present application, a fusion tag and a fusion base station (anchor) are employed, enabling accurate positioning of the vehicle key with only a single anchor installed on the vehicle. This not only improves the positioning performance but also reduces deployment complexity, and is applicable to a wide range of scenarios.

**In** some embodiments of the present disclosure, the method further includes: determining an error of the position information according to the angle information and the distance information; and correcting the position information according to the error.

Assuming that the distance error is Δd, and the angle error is Δθ, the error of the key coordinates X and Y may be derived as follows.

$$\Delta x = (d + \Delta d) * (\cos(\theta + \Delta\theta)) - d * \cos\theta$$

$$\Delta y = (d + \Delta d) * (\sin(\theta + \Delta\theta)) - d * \sin\theta$$

Further, the overall error of the positioning result can be obtained according to formula (3).

$$\Delta p = \sqrt{\Delta x^2 + \Delta y^2} = \sqrt{(d + \Delta d)^2 + d^2 - 2d(d + \Delta d) * \cos(\Delta\theta)} \qquad (3).$$

Δd represents an error of the distance information; Δθ represents an error of the angle information; Δx represents an error of the coordinate x, Δy represents an error of the coordinate y, and Δp represents an error of the position information.

In this application, the ranging precision (precision of the distance information) can reach 0.1 meters, and the angle precision (precision of the angle information) can reach 3°. Based on this, the positioning error distribution result diagram according to an embodiment of the present application is shown in FIG. 4. As seen from FIG. 4, the positioning error of the smart key within 10 meters from the anchor does not exceed 0.3m, and within 5 meters the positioning error does not exceed 0.2m. Furthermore, the positioning precision increases as the smart key approaches the anchor. Therefore, whether the smart key is inside or outside the vehicle, a high-precision positioning result can be obtained.

After the error of the position information is obtained, the position information can be corrected according to the obtained error, and the corrected position information result is used as the final positioning result.

**In** some embodiments of the present disclosure, the method further includes: controlling one or more of greeting, unlocking, starting, or locking of a control system of the vehicle, when determining, according to the distance information of the vehicle-mounted positioning tag, that the smart key is within a preset distance from the vehicle.

The positioning result obtained based on the high-precision smart key positioning method described above can easily enable vehicle control functions based on the key's location, including scenarios such as greeting, unlocking, starting, and locking.

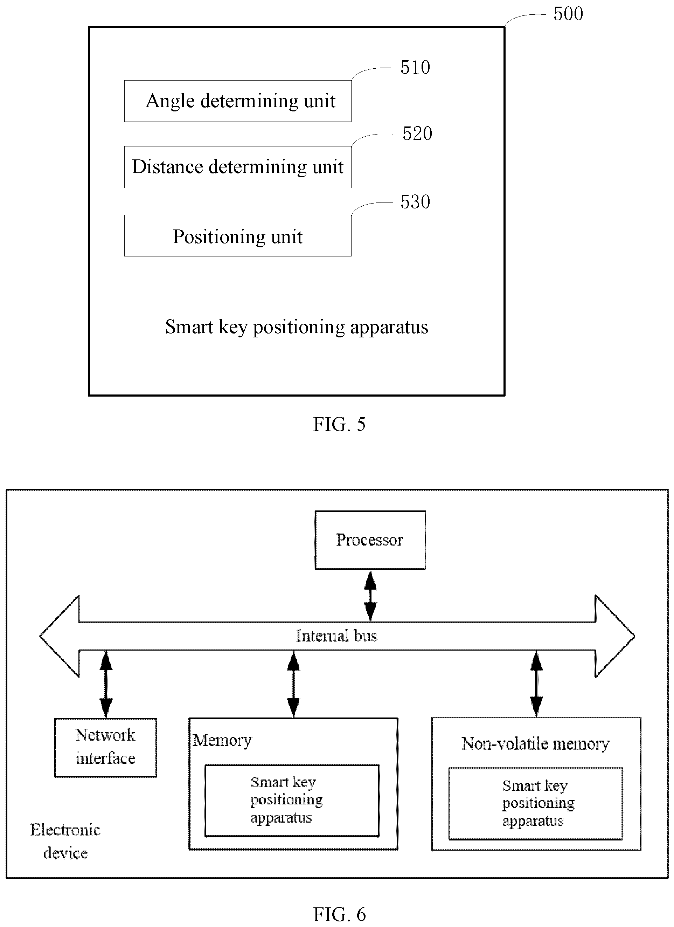

FIG. 5 is a schematic structural diagram of an apparatus for positioning a smart key according to an embodiment of the present disclosure. It can be seen from FIG. 5 that the positioning apparatus 500 of the smart key includes:

an angle determining unit 510, configured to receive a first positioning signal, and determine angle information of the vehicle-mounted positioning tag according to the first positioning signal;
a distance determining unit 520, configured to receive a second positioning signal and a third positioning signal, and determine distance information of the vehicle-mounted positioning tag according to the second positioning signal and the third positioning signal; and
a positioning unit 530, configured to determine position information of the vehicle-mounted positioning tag according to the angle information and the distance information.

In some embodiments of the present disclosure, in the foregoing apparatus, the positioning unit 530 is further configured to determine an error of the position information according to the angle information and the distance information; and correct the position information according to the error.

In some embodiments of this application, in the foregoing apparatus, the first positioning signal is an AOA positioning signal, and the second positioning signal is a UWB signal.

In some embodiments of this application, in the foregoing apparatus, the positioning unit 530 is configured to determine position information of the vehicle-mounted positioning tag according to the following formulas (1) to (2).

$$x = x_{anchor} + d * \cos\theta \quad (1);$$

$$y = y_{anchor} + d * \sin\theta \quad (2);$$

(x, y) represents position coordinates of the vehicle-mounted positioning tag; ($x_{anchor}$, $y_{anchor}$) represents position coordinates of the vehicle anchor; d represents a distance from the vehicle-mounted positioning tag to the vehicle anchor; and θ represents an included angle formed between a line connecting the vehicle-mounted positioning tag to the vehicle anchor and a positive direction of a horizontal axis.

In some embodiments of this application, in the foregoing apparatus, the positioning unit 530 is configured to determine the error of the location information according to the following formula (3).

$$\Delta p = \sqrt{\Delta x^2 + \Delta y^2} = \sqrt{(d + \Delta d)^2 + d^2 - 2d(d + \Delta d) * \cos(\Delta\theta)} \quad (3);$$

where

$$\Delta x = (d + \Delta d) * (\cos(\theta + \Delta\theta)) - d * \cos\theta \;;$$

$$\Delta y = (d + \Delta d) * (\sin(\theta + \Delta\theta)) - d * \sin\theta;$$

Δd represents an error of the distance information; Δθ represents an error of the angle information; Δx represents an error of the coordinate x, Δy represents an error of the coordinate y, and Δp represents an error of the position information.

In some embodiments of this application, the apparatus further includes: a control unit, configured to control one or more of greeting, unlocking, starting, or locking of a control system of the vehicle, when determining, according to the distance information of the vehicle-mounted positioning tag, that the smart key is within a preset distance from the vehicle.

It should be noted that the positioning apparatus can implement the foregoing method for positioning a smart key, and details are not described herein again.

FIG. 6 is a schematic structural diagram of an electronic device according to an embodiment of this application.

Referring to FIG. 6, at a hardware level, the electronic device includes a processor, and optionally further includes an internal bus, a network interface, and a memory. The memory may include an internal storage, for example, a high-speed random-access memory (RAM), or may further include a non-volatile memory, for example, at least one magnetic disk memory. Certainly, the electronic device may further include hardware required by other services.

The processor, the network interface, and the memory may be connected to each other through the internal bus, and the internal bus may be an Industry Standard Architecture (ISA) bus, a Peripheral Component Interconnect (PCI) bus, an Extended Industry Standard Architecture (EISA) bus, or the like. The bus may be classified into an address bus, a data bus, a control bus, and the like. For ease of representation, only one bidirectional arrow is used to represent the bus in FIG. 6, but this does not mean that there is only one bus or one type of bus.

The memory is configured to store a program. Specifically, the program may include program code, and the program code includes a computer operation instruction. The memory may include a memory and a non-volatile memory, and provide instructions and data to the processor.

The processor reads the corresponding computer program from the non-volatile memory to the memory and then runs the computer program, and forms the positioning apparatus of the smart key on the logic level. The processor executes the program stored in the memory, and is specifically configured to perform the foregoing method.

The method performed by the positioning apparatus of the smart key disclosed in the embodiment shown in FIG. 5 of this application may be applied to a processor, or implemented by a processor. The processor may be an integrated circuit chip, and has a signal processing capability. **In** an implementation process, each step of the foregoing method may be completed by using an integrated logic circuit of hardware in the processor or an instruction in a form of software. The processor may be a general-purpose processor, including a central processing unit (CPU), a network processor (NP), or the like, or may be a digital signal processor (DSP), an application-specific integrated circuit (ASIC), a field-programmable gate array (FPGA) or another programmable logic device, a discrete gate or transistor logic device, or a discrete hardware component. The processor may implement or perform the method, steps, and logical block diagrams disclosed in the embodiments of this application. The general-purpose processor may be a microprocessor, or the processor may be any conventional processor or the like. The steps of the method disclosed with reference to the embodiments of this application may be directly performed and completed by a hardware decoding processor, or may be performed and completed by a combination of hardware and software modules in a decoding processor. The software module may be located in a mature storage medium in the art, such as a random-access memory, a flash memory, a read-only memory, a programmable read-only memory, an electrically erasable programmable memory, or a register. The storage medium is located in the memory, and the processor reads information in the memory and performs the steps of the foregoing method in combination with hardware of the processor.

The electronic device may further perform the method performed by the positioning apparatus of the smart key in FIG. 5, and implement the function of the positioning apparatus of the smart key in the embodiment shown in FIG. 5.

An embodiment of this application further provides a computer-readable storage medium, where the computer-readable storage medium stores one or more programs, the one or more programs include instructions, and when the instructions are executed by an electronic device including a plurality of applications, the electronic device is enabled to perform the method performed by the positioning apparatus of the smart key in the embodiment shown in FIG. 5, and is specifically configured to perform the foregoing method.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product implemented on one or more computer-usable storage media (including but not limited to a disk memory, a CD-ROM, an optical memory, and the like) including computer-usable program codes.

This application is described with reference to the flowcharts and/or block diagrams of the method, the device (system), and the computer program product according to the embodiments of this application. It should be understood that computer program instructions may be used to implement each process and/or block in the flowcharts and/or the block diagrams and a combination of a process and/or a block in the flowcharts and/or the block diagrams. These computer program instructions may be provided to a general-purpose computer, a special-purpose computer, an embedded processor, or a processor of another programmable data processing device to generate a machine, so that the instructions executed by the processor of the computer or other programmable data processing devices generate an apparatus for implementing the functions specified in one or more flows of the flowcharts and/or one or more blocks in the block diagrams.

These computer program instructions may also be stored in a computer-readable memory capable of guiding a computer or other programmable data processing devices to operate in a specific manner, so that the instructions stored in the computer-readable memory produce an article of manufacture including an instruction apparatus that implements the functions specified in one or more flows of the flowchart and/or one or more blocks of the block diagram.

These computer program instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowchart and/or one or more blocks of the block diagram.

In a typical configuration, a computing device includes one or more processors (CPU), an input/output interface, a network interface, and a memory.

The memory may include a non-persistent memory, a random-access memory (RAM), and/or a non-volatile memory in a computer-readable medium, for example, a read-only memory (ROM) or a flash RAM. The memory is an example of a computer-readable medium.

The computer-readable medium includes persistent, non-persistent, movable, and non-removable media that can store information by using any method or technology. The information may be a computer-readable instruction, a data structure, a program module, or other data. Examples of computer storage media include, but are not limited to, a phase change memory (PRAM), a static random access memory (SRAM), a dynamic random access memory (DRAM), other types of random access memory (RAM), a read only memory (ROM), an electrically erasable programmable read only memory (EEPROM), a flash memory or other memory technology, a read only optical disk read only memory (CD-ROM), a digital versatile disk (DVD) or other optical storage, magnetic cassettes, magnetic tape magnetic disk storage or other magnetic storage devices, or any other non-transmission medium, which can be used to store information accessible by a computing device. As defined herein, the computer-readable medium does not include transient media such as modulated data signals and carriers.

It should also be noted that the terms "comprising," "including" or any other variation thereof are intended to cover a non-exclusive inclusion, so that a process, method, commodity, or device that includes a series of elements includes not only those elements, but also other elements that are not explicitly listed, or elements inherent to such a process, method, commodity, or device. In the absence of more restrictions, the statement "includes one... " does not exclude the existence of another same element in the process, method, commodity, or device that includes the element.

A person skilled in the art should understand that the embodiments of this application may be provided as a method, a system, or a computer program product. Therefore, the present disclosure may take the form of an entirely hardware embodiment, an entirely software embodiment or an embodiment combining software and hardware aspects. Moreover, this application may use a form of a computer program product implemented on one or more computer-usable storage media (including but not limited to a disk memory, a CD-ROM, an optical memory, and the like) including computer-usable program codes.

The foregoing descriptions are merely embodiments of this application, and are not intended to limit this application. For a person skilled in the art, the present disclosure may have various modifications and changes. Any modification, equivalent replacement, or improvement made without departing from the spirit and principle of this application shall fall within the scope of the claims of this application.

**Claims**

1. A method for positioning a smart key, the method being implemented by a smart key positioning system, the system comprising a vehicle-mounted positioning apparatus, a vehicle anchor and a vehicle-mounted positioning tag that are communicatively connected to each other, the vehicle-mounted positioning tag being loaded in the smart key, and the vehicle anchor being loaded at a designated position of a vehicle;

the vehicle-mounted positioning tag broadcasting a first positioning signal, which is received by the vehicle anchor and forwarded to the vehicle-mounted positioning apparatus; and
the vehicle-mounted positioning tag broadcasting a second positioning signal, which is received by the vehicle anchor, a feedback signal being generated by the vehicle anchor based on the second positioning signal, a third positioning signal being generated by the vehicle-mounted positioning tag based on the feedback signal and transmitted together with the second positioning signal to the vehicle-mounted positioning apparatus;
wherein the method is applied to the vehicle-mounted positioning apparatus, and the method comprises:

receiving the first positioning signal, and determining angle information of the vehicle-mounted positioning tag according to the first positioning signal;
receiving the second positioning signal and the third positioning signal, and determining distance information of the vehicle-mounted positioning tag according to the second positioning signal and the third positioning signal; and
determining position information of the vehicle-mounted positioning tag according to the angle information and the distance information.

2. The method according to claim 1, wherein the method further comprises:

   determining an error of the position information according to the angle information and the distance information; and
   correcting the position information according to the error.

3. The method according to claim 1, wherein the first positioning signal is an AOA positioning signal, and the second positioning signal is a UWB signal.

4. The method according to claim 2, wherein the determining the position information of the vehicle-mounted positioning tag according to the angle information and the distance information comprises:
   determining the position information of the vehicle-mounted positioning tag according to the following formulas (1) to (2):

$$x = x_{anchor} + d * \cos \theta \quad (1);$$

$$y = y_{anchor} + d * \sin \theta \quad (2);$$

   wherein (x, y) represents position coordinates of the vehicle-mounted positioning tag; ($x_{anchor}$, $y_{anchor}$) represents position coordinates of the vehicle anchor; d represents a distance from the vehicle-mounted positioning tag to the vehicle anchor; and $\theta$ represents an included angle formed between a line connecting the vehicle-mounted positioning tag to the vehicle anchor and a positive direction of a horizontal axis.

5. The method according to claim 2, wherein the determining the error of the position information according to the angle information and the distance information comprises:
   determining the error of the position information according to the following formula (3):

$$\Delta p = \sqrt{\Delta x^2 + \Delta y^2} = \sqrt{(d + \Delta d)^2 + d^2 - 2d(d + \Delta d) * \cos(\Delta \theta)} \quad (3);$$

   wherein

$$\Delta x = (d + \Delta d) * (\cos(\theta + \Delta \theta)) - d * \cos \theta;$$

$$\Delta y = (d + \Delta d) * (\sin(\theta + \Delta \theta)) - d * \sin \theta;$$

   $\Delta d$ represents an error of the distance information; $\Delta \theta$ represents an error of the angle information; $\Delta x$ represents an error of a coordinate x, $\Delta y$ represents an error of a coordinate y, and $\Delta p$ represents an error of the position information.

6. The method according to any one of claims 1 to 5, wherein the method further comprises:
   controlling one or more of greeting, unlocking, starting, or locking of a control system of the vehicle, when determining, according to the distance information of the vehicle-mounted positioning tag, that the smart key is within a preset distance from the vehicle.

7. A vehicle-mounted positioning apparatus, comprising:

   an angle determining unit, configured to receive a first positioning signal, and determine angle information of a vehicle-mounted positioning tag according to the first positioning signal;
   a distance determining unit, configured to receive a second positioning signal and a third positioning signal, and determine distance information of the vehicle-mounted positioning tag according to the second positioning signal and the third positioning signal; and
   a positioning unit, configured to determine position information of the vehicle-mounted positioning tag according to the angle information and the distance information.

8.  A system for positioning a smart key, the system comprising a vehicle-mounted positioning apparatus, a vehicle anchor and a vehicle-mounted positioning tag that are communicatively connected to each other, the vehicle-mounted positioning tag being loaded in the smart key, and the vehicle anchor being loaded at a designated position of a vehicle;

    the vehicle-mounted positioning tag is configured to broadcast a first positioning signal and a second positioning signal, generate a third positioning signal according to a feedback signal sent by the vehicle anchor, and send the second positioning signal and the third positioning signal to the vehicle-mounted positioning apparatus;
    the vehicle anchor is configured to receive the first positioning signal, forward the first positioning signal to the vehicle-mounted positioning apparatus, and generate a feedback signal according to the received second positioning signal and return the feedback signal to the vehicle-mounted positioning tag; and
    the vehicle-mounted positioning apparatus is configured to receive the first positioning signal, determine angle information of the vehicle-mounted positioning tag according to the first positioning signal, receive the second positioning signal and the third positioning signal, determine distance information of the vehicle-mounted positioning tag according to the second positioning signal and the third positioning signal, and determine position information of the vehicle-mounted positioning tag according to the angle information and the distance information.

9.  An electronic device, comprising:

    a processor; and
    a memory configured to store computer-executable instructions that, when executed, cause the processor to perform the method according to any one of claims 1 to 6.

10. A computer-readable storage medium storing one or more programs that, when executed by an electronic device comprising a plurality of applications, cause the electronic device to perform the method according to any one of claims 1 to 6.

FIG. 1

FIG. 2

Receive a first positioning signal, and determine angle information of a vehicle-mounted positioning tag according to the first positioning signal — S310

Receive a second positioning signal and a third positioning signal, and determine distance information of the vehicle-mounted positioning tag according to the second positioning signal and the third positioning signal — S320

Determine position information of the vehicle-mounted positioning tag according to the angle information and the distance information — S330

FIG. 3

FIG. 4

FIG. 5

FIG. 6

## INTERNATIONAL SEARCH REPORT

| International application No. |
| --- |
| **PCT/CN2023/122377** |

### A. CLASSIFICATION OF SUBJECT MATTER

G01S5/06(2006.01)i

According to International Patent Classification (IPC) or to both national classification and IPC

### B. FIELDS SEARCHED

Minimum documentation searched (classification system followed by classification symbols)

IPC: G01S H04W

Documentation searched other than minimum documentation to the extent that such documents are included in the fields searched

Electronic data base consulted during the international search (name of data base and, where practicable, search terms used)

CNTXT; CNKI; WPABS; ENTXTC; ENTXT; VEN: 清研智行, 钥匙, 锁, 定位, 标定, 导航, 角度, 方位, 方向, 距离, 长度, 位置, 坐标, 标签, UWB, AOA, TOF, TOA, TDOA, car, vehicle, key, tag, position, coordinate, angle, direction, distance

### C. DOCUMENTS CONSIDERED TO BE RELEVANT

| Category* | Citation of document, with indication, where appropriate, of the relevant passages | Relevant to claim No. |
| --- | --- | --- |
| X | CN 114980316 A (BEIJING UBITRAQ TECHNOLOGY CO., LTD.) 30 August 2022 (2022-08-30)<br>description, paragraphs [0023]-[0099], and figures 2-8 | 1-10 |
| A | CN 114384465 A (GUANGDONG OPPO MOBILE COMMUNICATIONS CO., LTD.) 22 April 2022 (2022-04-22)<br>entire document | 1-10 |
| A | CN 115158220 A (ZHUHAI MEIZU TECHNOLOGY CO., LTD.) 11 October 2022 (2022-10-11)<br>entire document | 1-10 |
| A | CN 111970672 A (GUANGDONG OPPO MOBILE COMMUNICATIONS CO., LTD.) 20 November 2020 (2020-11-20)<br>entire document | 1-10 |
| A | US 2022001836 A1 (AMOTECH CO., LTD.) 06 January 2022 (2022-01-06)<br>entire document | 1-10 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 December 2023** | **11 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/122377**

| Patent document cited in search report | | | Publication date (day/month/year) | Patent family member(s) | Publication date (day/month/year) |
|---|---|---|---|---|---|
| CN | 114980316 | A | 30 August 2022 | None | |
| CN | 114384465 | A | 22 April 2022 | None | |
| CN | 115158220 | A | 11 October 2022 | None | |
| CN | 111970672 | A | 20 November 2020 | None | |
| US | 2022001836 | A1 | 06 January 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211347628X